# EUROPEAN PATENT APPLICATION

(11) **EP 4 435 998 A1**
(43) Date of publication of application: **25.09.2024**
(21) Application number: 23208465.7
(22) Date of filing: 08.11.2023
(51) Int. Cl.: H02J 7/00, H02J 7/02

(54) **METHOD AND APPARATUS FOR CONTROLLING MULTI-BATTERY CHARGING SYSTEM, AND MULTI-BATTERY CHARGING APPARATUS**

(30) Priority: 21.03.2023 CN 202310290682
(71) Applicant: Sungrow Power Supply Co., Ltd., Hefei, Anhui 230088 (CN)
(72) Inventor: LIANG, Dongyu, Hefei Anhui (CN); LI, Qing, Hefei Anhui (CN); CHEN, Qiangdong, Hefei Anhui (CN); DONG, Wengong, Hefei Anhui (CN); ZHAO, Yunfei, Hefei Anhui (CN); HAN, Chen, Hefei Anhui (CN)
(74) Representative: Zacco Norway AS

(57) **Abstract**

Provided are a method and apparatus for controlling a multi-battery charging system, and a multi-battery charging system. The method includes: sorting battery voltages of multiple single-machine systems in the multi-battery charging system, and determining a first single-machine system from the multiple single-machine systems based on a sorting result; switching on a pre-charge relay in the first single-machine system, and determining a pre-charge state of the first single-machine system based on a voltage of the first single-machine system; and in a case that the pre-charge state indicates completion of pre-charging, switching on a main contactor of the first single-machine system, switching off the pre-charge relay, and powering on single-machine systems other than the first single-machine system among the multiple single-machine systems. With the technical solution, the technical problem of affecting the service life of a battery system in the multi-battery charging system due to repeated switching on/off of a pre-charge relay of the battery system is solved.

## Description

### FIELD

The present disclosure relates to the field of energy storage battery systems, and in particular to a method and an apparatus for controlling a multi-battery charging system and a multi-battery charging apparatus.

### BACKGROUND

In a conventional household energy storage battery system, a DC side of a power conversion system has a large-capacity bus capacitor. When powering on, at the instant that a main negative DC contactor is directly switched on, a battery is equivalent to being short-circuited, because a large current is generated and causes adhesion of a DC contactor. To avoid this, a pre-charge function is added to the DC circuit. A conventional multi-battery pre-charge control still has the following shortcomings. An automatic switching process of a multi-battery parallel system is widely used in various scenarios, to pre-charging each battery that is switched to. In a case that the battery system is switched repeatedly, a pre-charge relay is switched on/off repeatedly, which affects a service life of the battery.

It is desired to provide an effective solution to the above problem.

### SUMMARY

Embodiments of the present disclosure provide a method and an apparatus for controlling a multi-battery charging system, and a multi-battery charging apparatus, in order to at least solve the technical problem of affecting the service life of a battery system in the multi-battery charging system due to repeated switching on/off of a pre-charge relay of the battery system.

According to an embodiment of the present disclosure, a method for controlling a multi-battery charging system is provided. The method includes: sorting battery voltages of multiple single-machine systems in the multi-battery charging system, and determining a first single-machine system from the multiple single-machine systems based on a sorting result, where the multiple single-machine systems are multiple battery systems in the multi-battery charging system; switching on a pre-charge relay in the first single-machine system, and determining a pre-charge state of the first single-machine system based on a voltage of the first single-machine system; and in a case that the pre-charge state indicates completion of pre-charging, switching on a main contactor of the first single-machine system, switching off the pre-charge relay, and powering on single-machine systems other than the first single-machine system among the multiple single-machine systems.

In an embodiment, the switching on a pre-charge relay in the first single-machine system, and determining a pre-charge state of the first single-machine system based on a voltage of the first single-machine system includes: remaining the pre-charge relay in a switched-on state for a first preset time period, in response to a first switching-on command; obtaining an input-side voltage of the first single-machine system and an output-side voltage of the first single-machine system; determining that pre-charging of the first single-machine system is completed in a case that the output-side voltage is greater than a preset percentage of the input-side voltage; and determining that pre-charging of the first single-machine system is uncompleted in a case that the output-side voltage is less than or equal to the preset percentage of the input-side voltage.

In an embodiment, on determining that pre-charging of the first single-machine system is uncompleted, the method further includes: step S 1, remaining the pre-charge relay in the switched-on state for the first preset time period, in response to a second switching-on command; step S2, obtaining an input-side voltage of the first single-machine system and an output-side voltage of the first single-machine system; step S3, determining whether the output-side voltage is greater than the preset percentage of the input-side voltage; determining that pre-charging of the first single-machine system is completed in a case that the output-side voltage is greater than a preset percentage of the input-side voltage; and determining pre-charging of the first single-machine system is uncompleted in a case that the output-side voltage is less than or equal to the preset percentage of the input-side voltage; performing, in a case that the output-side voltage is less than or equal to the preset percentage of the input-side voltage, a first round of repeating the step S1 to the step S3 for a first preset number of times; and determining that pre-charging of the first single-machine system is failed, in a case that the output-side voltage is still less than or equal to the preset percentage of the input-side voltage after the first round of repeating the step S 1 to the step S3 for the first preset number of times.

In an embodiment, after the determining that pre-charging of the first single-machine system is failed, the method further includes: generating a first alarm message for failure of pre-charging; after a second preset time period, clearing the first alarm message and performing a second round of repeating the step S 1 to the step S3 for the first preset number of times; determining existence of a fault in pre-charging of the first single-machine system, in a case that the output-side voltage is still less than or equal to the preset percentage of the input-side voltage after the second round of repeating the step S 1 to the step S3 for the first preset number of times, and generating a second alarm message for the fault in pre-charging.

In an embodiment, the sorting battery voltages of single-machine systems in the multi-battery charging system, and determining a first single-machine system from the multiple single-machine systems based on a sorting result includes: obtaining respective identification numbers of the multiple single-machine systems and respective battery voltages of the multiple single-machine systems, wherein the identification numbers are in a one-to-one correspondence to the battery voltages; forming an initial sequence constituted by the battery voltages; sequentially comparing adjacent battery voltages in the initial sequence, swapping positions of a first battery voltage and a second battery voltage in the sequence if the first battery voltage is greater than the second battery voltage, wherein the first battery voltage is one of the adjacent battery voltages in the initial sequence which is closer to a starting position of the initial sequence, and the second battery voltage is one of the adjacent battery voltages in the initial sequence which is closer to an end position of the initial sequence; repeating the swapping to obtain a sorted array in which the battery voltages are sorted in an ascending order; determining a sorting result of the single-machine systems based on the identification numbers corresponding to the battery voltages in the sorted array; and determining a single-machine system ranked first in the sorting result as the first single-machine system.

In an embodiment, the powering on single-machine systems other than the first single-machine system includes: setting a flag bit of a bus in the multi-battery charging system to a target value, in a case that the pre-charge state indicates completion of pre-charging; determining whether main contactors of the multiple single-machine systems are switched on, in a case that the flag bit of the bus is the target value; determining, in a case that a main contactor of a second single-machine system among the multiple single-machine systems is not switched on, whether a difference between the voltage of the second single-machine system and a voltage of the bus is less than or equal to a preset voltage; and switching on the main contactor of the second single-machine system, in a case that the difference between the voltage of the second single-machine system and the voltage of the bus is less than or equal to the preset voltage value.

In an embodiment, the method further includes: determining that the second single-machine system is in a standby state, in a case that the difference between the voltage of the second single-machine system and the voltage of the bus is greater than the preset voltage value.

According to another aspect of the present disclosure, an apparatus for controlling a multi-battery charging system is further provided. The apparatus includes: a sorting module, configured to sort battery voltages of multiple single-machine systems in the multi-battery charging system, and determine a first single-machine system from the multiple single-machine systems based on a sorting result, where the multiple single-machine systems are multiple battery systems in the multi-battery charging system; a determination module, configured to switch on a pre-charge relay in the first single-machine system, and determine a pre-charge state of the first single-machine system based on a voltage of the first single-machine system; and an execution module, configured to: in a case that the pre-charge state indicates completion of pre-charging, switch on a main contactor of the first single-machine system, switch off the pre-charge relay, and power on single-machine systems other than the first single-machine system among the multiple single-machine systems.

According to another aspect of the present disclosure, a multi-battery charging apparatus is further provided. The multi-battery charging apparatus includes: a first single-battery charging system and a second single-battery charging system. The first single-battery charging system is determined from a sorting result obtained by sorting battery voltages of single-battery charging systems in the multi-battery charging apparatus. The second single-battery charging system is a single-battery charging system that is in the multi-battery charging apparatus but is other than the first single-battery charging system. The first single-battery charging system includes a first pre-charge relay and a first main contactor. The first pre-charge relay is configured to be switched on after the battery voltages of single-battery charging systems are sorted, and is further configured to be switched off in a case that a pre-charging state of the first single-battery charging system indicates completion of pre-charging. The first main contactor is configured to be switched on in a case that the pre-charge state of the first single-battery charging system indicates completion of pre-charging. The second single-battery charging system is configured to be powered on after the first main contactor is switched on and the first pre-charge relay is switched off.

According to another aspect of the present disclosure, a non-volatile storage medium storing a program is provided. The program, when executed, controls a device where the non-volatile storage medium is located to perform the method for controlling a multi-battery charging system.

According to another aspect of the present disclosure, an electronic device is further provided. The electronic device includes a memory and a processor. The processor is configured to execute a program stored in the memory. The program, when executed, performs the method controlling a multi-battery charging system.

In the embodiments of the present disclosure, the battery voltages of the multiple single-machine systems in the multi-battery charging system are sorted, and a first single-machine system is determined from the multiple single-machine systems based on a sorting result, where the multiple single-machine systems are multiple battery systems in the multi-battery charging system; a pre-charge relay of the first single-machine system is switched on, and a pre-charge state of the first single-machine system is determined based on a voltage of the first single-machine system; and in a case that the pre-charge state indicates completion of pre-charging, a main contactor of the first single-machine system is switched on, the pre-charge relay is switched off, and single-machine systems other than the first single-machine system are powered on. With the step of determining the first single-machine system based on the sorting result of the battery voltages of the single-machine systems, the step of switching on the pre-charge relay in the first single-machine system, and the step of switching on the main contactor in the first single-machine system and switching off the pre-charge relay in a case that the pre-charge state indicates completion of pre-charging, a purpose of avoiding repeated switching on/off of the pre-charge relay of each battery system in the multi-battery charging system is achieved, and a technical effect of ensuring a usage time of the battery system is realized, thereby solving the technical problem of affecting the service life of a battery system in the multi-battery charging system due to repeated switching on/off of a pre-charge relay of the battery system.

### BRIEF DESCRIPTION OF THE DRAWINGS

The accompanying drawings described herein are used for providing a further understanding of the present disclosure, and form a part of the present disclosure. Exemplary embodiments of the present disclosure and descriptions thereof are for explaining the present disclosure, and do not constitute any inappropriate limitation to the present disclosure. In the drawings:
Figure 1 is a flow chart of a method for controlling a multi-battery charging system according to an embodiment of the present disclosure;
Figure 2 is a schematic diagram of a multi-battery charging system according to an embodiment of the present disclosure;
Figure 3 is a flow chart of sorting battery voltages of multiple single-machine systems according to an embodiment of the present disclosure;
Figure 4 is a flow chart of pre-charging a first single-machine system according to an embodiment of the present disclosure;
Figure 5 is a flow chart of powering on a second single-machine system according to an embodiment of the present disclosure;
Figure 6 is a structural diagram of an apparatus for controlling a multi-battery charging system according to an embodiment of the present disclosure;
Figure 7 is a structural diagram of a multi-battery charging apparatus according to an embodiment of the present disclosure; and
Figure 8 is a block diagram of a hardware structure of a computer terminal (or electronic device) for implementing a method for controlling a multi-battery charging system according to an embodiment of the present disclosure.

### DETAILED DESCRIPTION

In order to enable those skilled in the art to understand the solutions in the present disclosure, hereinafter the technical solutions of embodiments of the present disclosure are described clearly and completely in conjunction with the drawings of the embodiments of the present disclosure. Apparently, the embodiments described below are only some embodiments, rather than all the embodiments of the present disclosure. Any other embodiments obtained by those skilled in the art based on the embodiments in the present disclosure without any creative effort shall fall within the protection scope of the present disclosure.

It should be noted that the terms "first", "second", and the like, in the description, claims and the accompanying drawings of the present disclosure are used to distinguish similar objects, rather than to describe a sequence or order. It should be understood that data used in such manner may be interchanged appropriately, so that the embodiments of the present disclosure may be implemented in an order other than those illustrated or described herein. Moreover, the terms "include (comprise)", "have", and any other variants thereof are intended to cover a non-exclusive inclusion. For example, a process, method, system, product, or device that includes a list of steps or units is not necessarily limited to the expressly listed steps or units, but may include other steps or units not expressly listed or inherent to the process, method, product, or device.

In order for a better understanding of the embodiments of the present disclosure, technical terms involved in the embodiments of the present disclosure are explained below.
a concept of pre-charging is explained below. In a household energy storage battery system, a DC side of a power conversion system has a large-capacity bus capacitor. When powering on, at the instant that a main negative DC contactor is directly switched on, a battery is equivalent to being short-circuited, because a large current is generated and causes adhesion of a DC contactor. To avoid this, a pre-charge function is added to the DC circuit. The pre-charging has the following advantages.

Firstly, the pre-charging can prevent adhesion or damage of a main positive contactor and a main negative contactor due to overcurrent and overheat. In a case that a capacitor is connected in parallel to a power supply, when the power supply is switched on, a voltage across the capacitor does not change suddenly but a current may change suddenly. At this time, a load resistance is equal to a resistance of a wire and a contactor, which is generally much less than 20mQ. A battery voltage is generally above 300V. This is equivalent to an instant shorted circuit, and an instantaneous current 1=300/0.02= 15000A is generated, causing damaging to the main positive contactor and the main negative contactor.

Secondly, the pre-charging can protect the capacitor from damage. Carriers in a solid medium dissociate and expand under an action of a strong electric field, which will result in electrical breakdown. An Overvoltage or overcurrent situation causes a working voltage of the capacitor to exceed a maximum withstand voltage of the device. In this case, a serious dielectric loss of the capacitive medium may be caused, an insulation may be damaged, and the medium may be broken down.

A power conversion system (PCS) can control charging and discharging of a storage battery, perform a conversion between alternating current and direct current, and directly supply power for an alternating current load when the power grid is not available. The PCS includes a DC/AC bidirectional converter, a control unit, and the like. The PCS controller receives a background control instruction through communication, and controls the converter to charge or discharge the battery based on a sign and magnitude of a power instruction, so as to regulate an active power and reactive power of the grid. The PCS controller communicates with a battery management system through a CAN interface to obtain battery pack state information, so as to realize protective charging and discharging of the battery and ensure a safe operation of the battery.

The conventional technology has the following problems. An automatic switching process of a multi-battery parallel system is widely used in various scenarios, and pre-charging is performed on each battery that is switched to. In a case that the battery system is switched repeatedly, a pre-charge relay is switched on/off repeatedly, which affects a service life of the battery. A circulating current may be generated at the instant when a main contactor of the multi-battery parallel system is switched on. A magnitude of the circulating current depends on a voltage difference between batteries in the parallel system. In a case that pre-charging is performed on multiple battery systems at the same time, there will be a large current in the circuit at the instant of switching-on, which results in damage to a pre-charge resistor. The conventional pre-charge strategy is simple, which only determines whether a voltage difference between the output side and the input side meets a requirement. In a case that the output side voltage does not reach a required value, the pre-charge relay is switched off for a long time. Hence, a short-circuit current may easily cause damage to the pre-charge resistor. In order to solve the above problems, embodiments of the present disclosure are provided as below.

An embodiment of a method for controlling a multi-battery charging system is provided. It should be noted that the steps shown in the flow chart in the accompanying drawings may be implemented as a set of computer-executable instructions in a computer system. Although a logical order is shown in the flow chart, in some cases the steps may be performed in a different order than that shown or described herein.

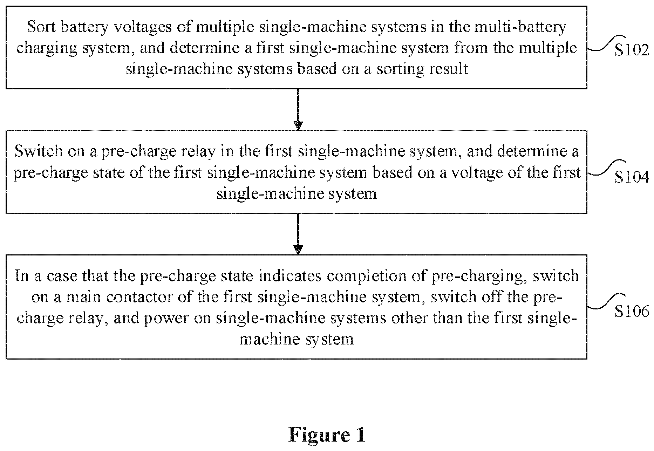

Figure 1 is a flow chart of a method for controlling a multi-battery charging system according to an embodiment of the present disclosure. As shown in Figure 1, the method includes the following steps S102 to S106.

In step S102, battery voltages of multiple single-machine systems in the multi-battery charging system are sorted, and a first single-machine system is determined from the multiple single-machine systems based on a sorting result, where the multiple single-machine systems are multiple battery systems in the multi-battery charging system.

In an embodiment of the present disclosure, a bubble sorting is performed on the battery voltages of multiple single-machine systems in the multi-battery charging system. Based on a result of the bubble sorting, a single-machine system having the least battery voltage (the first single-machine system) is determined from the single-machine systems, and a serial number of the system is determined. In the bubble sorting, adjacent numbers are compared to each other. A sequence of the two numbers is remained in a case that the numbers are in an ascending order. Positions of the two numbers are swapped in a case that the numbers are in a descending order. Such comparison is repeated until a sorted array is obtained.

Description is made by take an array (3, 2, 7, 4, 1) as an example. In a first round of comparison, values indexed by 0 and 1 are compared to each other, that is, the comparison is made on 3 and 2. There has 3>2, which indicates a descending order. Therefore, positions of the values are swapped. A comparison is further made on values indexed by 1 and 2, that is, the comparison is made on 3 and 7. There has 3<7, which indicates an ascending order. Therefore, positions of the 3 and 7 are remained. A comparison is further made on values indexed by 2 and 3, that is, the comparison is made on 7 and 4. There has 7>4, which indicates a descending order. Therefore, positions of the 7 and 4 are swapped. A comparison is further made on values indexed by 3 and 4, that is, the comparison is made on 7 and 1. There has 7>1, which indicates a descending order. Therefore, positions of the 7 and 1 are swapped. Here, the last value is compared, so that the first round of position swapping ends. Since the values are compared and swapped sequentially, the greatest value in the array is placed at the last position in the current array. The subsequent sorting does not need to traverse to the last position, as the greatest value is at the last position.

In a second round of comparison, as the greatest value in the array is at the last position, the last position may be ignored in the second round of comparison. That is, comparisons are made on values positioned before the last value. The comparisons are similar to those in the first round. First, a comparison is made on values indexed by 0 and 1, that is, the comparison is made on 2 and 3. There has 2<3, which indicates an ascending order. Therefore, positions of the 2 and 3 are remained. A comparison is further made on values indexed by 1 and 2, that is, the comparison is made on 3 and 4. There has 3<4, which indicates an ascending order. Therefore, positions of the 3 and 4 are remained. A comparison is further made on values indexed by 2 and 3, that is, the comparison is made on 4 and 1. There has 4>1, which indicates a descending order. Therefore, positions of the 4 and 1 are swapped. The second round ends here as values positioned before the value 7 are all traversed. Thereby, a second greatest value in the array is placed to a second last position in the array. The subsequent sorting does not need to traverse to the last two positions, as the greatest two values are at the last two positions.

In a third round of comparison, as the greatest two values in the array are at the last two positions, the last two positions may be ignored in the third round of comparison. That is, comparisons are made on values positioned before the last two values. The comparisons are similar to those in the first round. First, a comparison is made on values indexed by 0 and 1, that is, the comparison is made on 2 and 3. There has 2<3, which indicates an ascending order. Therefore, positions of the 2 and 3 are remained. A comparison is further made on values indexed by 1 and 2, that is, the comparison is made on 3 and 1. There has 3>1, which indicates a descending order. Therefore, positions of the 3 and 1 are swapped. The third round ends here as values positioned before the values 4 and 7 are all traversed. Thereby, a third greatest value in the array is placed to a third last position in the array. The subsequent sorting does not need to traverse to the last three positions, as the greatest three values are at the last three positions.

In a fourth round of comparison, as the greatest three values in the array are at the last three positions, the last three positions may be ignored in the fourth round of comparison. That is, comparisons are made on values positioned before the last three values. The comparisons are similar to those in the first round. First, a comparison is made on values indexed by 0 and 1, that is, the comparison is made on 2 and 1. There has 2>1, which indicates a descending order. Therefore, positions of the 2 and 1 are swapped. The third round ends here as values positioned before the values 3, 4 and 7 are all traversed. At this time, the traversal is completed and the array is sorted.

In the above steps, the multi-battery charging system selects only a certain single-machine system for pre-charge control, in order to avoid damage to a pre-charge resistor caused by simultaneous pre-charging of multiple machines. In addition, a master machine collects on/off states of the main contactors of all the single-machine systems, and controls the powering on of a slave machine. Thereby, it is ensured that only one single-machine system of the multi-battery charging systems is in pre-charging.

In step S104, a pre-charge relay in the first single-machine system is switched on, and a pre-charge state of the first single-machine system is determined based on a voltage of the first single-machine system.

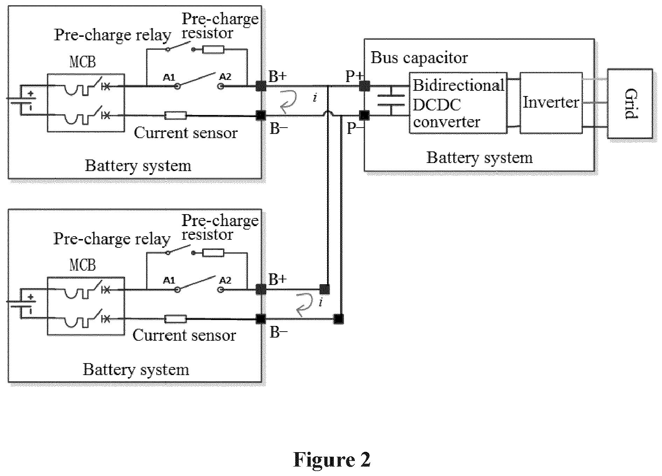

Figure 2 shows a schematic diagram of a multi-battery charging system according to another embodiment of the present disclosure. In Figure 2, in a single-machine system, a series-connection of a pre-charge relay and a pre-charge resistor is connected in parallel to a main contactor of the single-machine system. In the process of pre-charging the single-machine system having the least battery voltage (the first single-machine system), the pre-charge relay is first switched on to connect to a pre-charging circuit. An input side (B+, B-) voltage V_{B} of a battery of the first single-machine system is then compared to an output side (P+, P-) voltage V_{P} of the battery of the first single-machine system. In a case that the output side voltage V_{P} is greater than 90% of the input side voltage V_{B}, it is determined that the pre-charging of the first single-machine system is completed, and otherwise, it is determined that the pre-charging of the first single-machine system is uncompleted.

In step S106, in a case that the pre-charge state indicates completion of pre-charging, the main contactor in the first single-machine system is switched on, the pre-charge relay is switched off, and single-machine systems other than the first single-machine system are powered on.

In a case that the pre-charging is completed, the main contactor is switched on, the pre-charge relay is switched off, a bus flag is set to 1, and a state of the main contactor of the single-machine system is reported to the bus.

It can be understood that a bus voltage is established after the pre-charging of the single-machine system is completed. The remaining single-machine systems of the multi-battery charging system may be powered on without the pre-charging, as long as a voltage difference satisfies a threshold of 3V (overall voltage acquisition accuracy).

With the above steps of determining the first single-machine system based on the sorting result of the battery voltages of the single-machine systems, switching on the pre-charge relay in the first single-machine system, and switching on the main contactor in the first single-machine system and switching off the pre-charge relay in a case that the pre-charge state indicates completion of pre-charging, the purpose of avoiding repeated switching on/off of the pre-charge relay of each battery system in the multi-battery charging system is achieved, and a technical effect of ensuring a usage time of the battery system is realized.

In an embodiment of the present disclosure, the switching on the pre-charge relay in the first single-machine system, and determining the pre-charge state of the first single-machine system based on the voltage of the first single-machine system includes: remaining the pre-charge relay in a switched-on state for a first preset time period, in response to a first switching-on command; obtaining an input-side voltage of the first single-machine system and an output-side voltage of the first single-machine system; determining that pre-charging of the first single-machine system is completed, in a case that the output-side voltage is greater than a preset percentage of the input-side voltage; and determining that pre-charging of the first single-machine system is uncompleted, in a case that the output-side voltage is less than or equal to the preset percentage of the input-side voltage.

In an embodiment of the present disclosure, after the pre-charge relay is remained in the switched-on state for 1 second in response to the first switching-on command, the input-side voltage of the first single-machine system and the output-side voltage of the first single-machine system are obtained. It is determined that the pre-charging of the first single-machine system is completed, in a case that the output-side voltage is greater than 90% of the input-side voltage. It is determined that the pre-charging of the first single-machine system is uncompleted, in a case that the output-side voltage is less than or equal to 90% of the input-side voltage.

In an embodiment of the present disclosure, on determining the un-completion of pre-charging of the first single-machine system, the method proceeds to the following steps: step S1, remaining the pre-charge relay in the switched-on state for the first preset time period, in response to a second switching-on command; step S2, obtaining an input-side voltage of the first single-machine system and an output-side voltage of the first single-machine system; step S3, determining whether the output-side voltage is greater than a preset percentage of the input-side voltage; determining that pre-charging of the first single-machine system is completed in a case that the output-side voltage is greater than the preset percentage of the input-side voltage; and determining that pre-charging of the first single-machine system is uncompleted in a case that the output-side voltage is less than or equal to the preset percentage of the input-side voltage; performing, in a case that the output-side voltage is less than or equal to the preset percentage of the input-side voltage, a first round of repeating the step S1 to the step S3 for a first preset number of times; and determining that pre-charging of the first single-machine system is failed, in a case that the output-side voltage is still less than or equal to the preset percentage of the input-side voltage after the first round of repeating the step S 1 to the step S3 for the first preset number of times.

For example, in step S1, the pre-charge relay is remained in the switched-on state for 1 second in response to the second switching-on command. In step S2, the input-side voltage of the first single-machine system and the output-side voltage of the first single-machine system are obtained. In step S3, it is determined whether the output-side voltage is greater than 90% of the input-side voltage. In a case that the output-side voltage is greater than 90% of the input-side voltage, it is determined that the pre-charging of the first single-machine system is completed. In a case that the output-side voltage is less than or equal to 90% of the input-side voltage, it is determined that the pre-charging of the first single-machine system is uncompleted, and the steps S1 to S3 are repeated for three times. In a case that the output-side voltage is still less than or equal to 90% of the input side voltage after the three repetitions of the steps S1 to S3, it is determined that the pre-charging of the first single-machine system is failed, and the first single-machine system enters a standby state.

In an embodiment, after determining the failure of pre-charging of the first single-machine system, the method further includes: generating a first alarm message for the failure of pre-charging; after a second preset time period, clearing the first alarm message and performing a second round of repeating the step S1 to the step S3 for the first preset number of times; determining existence of a fault in pre-charging of the first single-machine system, in a case that the output-side voltage is still less than or equal to the preset percentage of the input-side voltage after the second round of repeating the step S1 to the step S3 for the first preset number of times, and generating a second alarm message for the fault in pre-charging.

For example, the first alarm message is cleared after 3 minutes. The step S1 to the step S3 is repeated for three times. After the three repetitions of the step S1 to the step S3, it is determined that there is a fault in the pre-charging of the first single-machine system, in a case that the output-side voltage is still less than or equal to 90% of the input-side voltage, and the second alarm message is generated based on the fault in pre-charging.

In an embodiment, the sorting battery voltages of multiple single-machine systems in the multi-battery charging system, and determining a first single-machine system from the multiple single-machine systems based on a sorting result may be performed through the following steps: obtaining respective identification numbers of the multiple single-machine systems and respective battery voltages of the multiple single-machine systems, wherein the identification numbers are in a one-to-one correspondence to the battery voltages; forming an initial sequence constituted by the battery voltages; sequentially comparing adjacent battery voltages in the initial sequence, swapping positions of a first battery voltage and a second battery voltage in the sequence if the first battery voltage is greater than the second battery voltage, wherein the first battery voltage is one of the adjacent battery voltages in the initial sequence which is closer to a starting position of the initial sequence, and the second battery voltage is one of the adjacent battery voltages in the initial sequence which is closer to an end position of the initial sequence; repeating the swapping to obtain a sorted array in which the battery voltages are sorted in an ascending order; determining a sorting result of the single-machine systems based on the identification numbers corresponding to the battery voltages in the sorted array; and determining a single-machine system ranked first in the sorting result as the first single-machine system.

For example, an initial sequence of battery voltages of the multiple single-machine systems in the multi-battery charging system is (3,5,7,1,2,9,4,6,8). A sorted array thereof is (1,2,3,4,5,6,7,8,9), that is, the single-machine system sorted at the first position is the single-machine system having the least battery voltage.

In an embodiment, the powering on the single-machine systems other than the first single-machine system is controlled through the following steps: determining whether main contactors of the multiple single-machine systems are switched on, in a case that the flag bit of the bus is the target value; determining, in a case that a main contactor of a second single-machine system among the multiple single-machine systems is not switched on, whether a difference between the voltage of the second single-machine system and a voltage of the bus is less than or equal to a preset voltage; and switching on the main contactor of the second single-machine system, in a case that the difference between the voltage of the second single-machine system and the voltage of the bus is less than or equal to the preset voltage value.

It can be understood that a bus voltage is established in a case that the flag bit of the bus is the target value. For any of the remaining single-machine systems of the multi-battery charging system (the second single-machine system), the main contactor in the single-machine system may be powered on without the pre-charging, as long as a voltage difference satisfies a threshold of 3V (overall voltage acquisition accuracy).

In an embodiment, in a case of a communication failure in the multi-battery charging system or addition of a new single-machine system in the multi-battery charging system, it is determined whether a single-machine system needs pre-charging based on the flag bit of the single-machine system.

In an embodiment of the present disclosure, it is determined that the second single-machine system is in a standby state, in a case that the difference between the voltage of the second single-machine system and the voltage of the bus is greater than the preset voltage value.

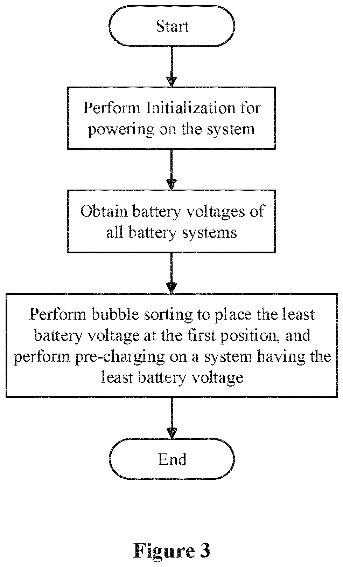

Figure 3 is a flow chart of sorting battery voltages of single-machine systems according to an embodiment of the present disclosure. As shown in Figure 3, the process includes the following steps S1 to S2.

In step S1, a bubble sorting is performed on the battery voltages of the single-machine systems, and a least battery voltage and a serial number of the system corresponding to the least battery voltage are outputted.

In step S2, pre-charging is performed on the single-machine system having the least battery voltage, and a pre-charge relay of the single-machine system is switched on.

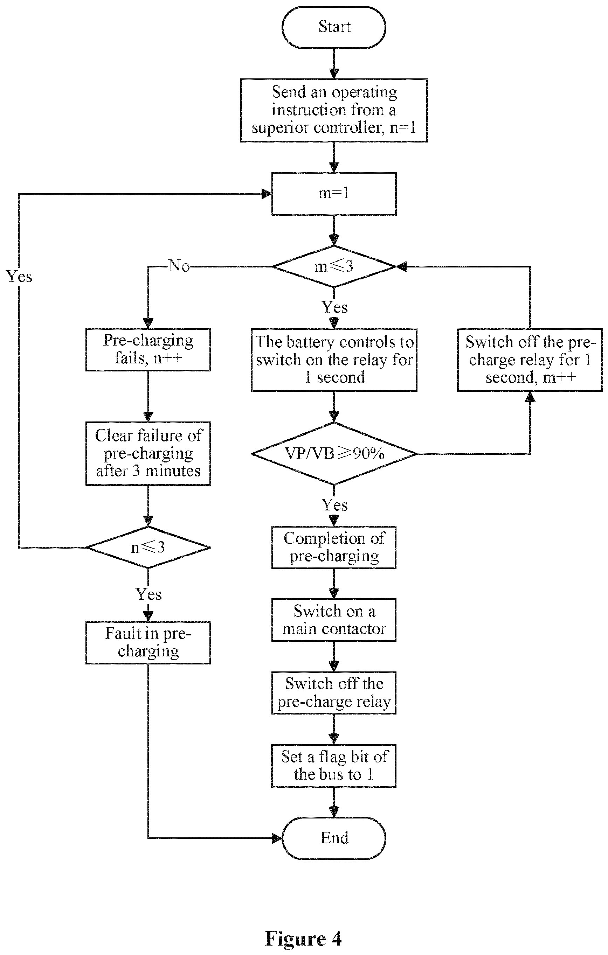

Figure 4 is a flow chart of pre-charging a first single-machine system according to an embodiment of the present disclosure. As shown in Figure 4, the process includes the following steps S1 to S9.

In step S 1, an operating instruction is sent from a superior controller.

In step S2, a pre-charge relay of the first single-machine system is switched on for 1 second.

In step S3, an input-side (B+, B-) voltage V_{B} of the first single-machine system is compared to an output-side (P+, P-) voltage V_{P} of the first single-machine system.

In step S4, it is determined whether the pre-charging is completed based on a percentage. For example, it is determined that the pre-charging is completed in a case that the output-side voltage of the battery is greater than 90% of the input-side voltage; and otherwise, it is determined that the pre-charging is uncompleted.

In step S5, in a case that the pre-charging is completed, the main contactor of the single-machine system is switched on, the pre-charge relay is switched off, a bus flag is set to 1, and a state of the main contactor of the single-machine system is reported to a master machine via the bus.

In step S6, in a case that the pre-charging is uncompleted, the pre-charge relay is switched off for 1 second, and the process proceeds to repeat steps S2, S3, S4, and S5.

In step S7, in a case that the pre-charging is uncompleted after three repetitions of the pre-charging, it is determined that the pre-charging fails and the system enters a standby state.

In step S8, an alarm message based on the failure of pre-charging is cleared after 3 minutes and the system waits for a next operating instruction from the superior controller.

In step S9, a fault of pre-charging of the system is reported, in a case that the pre-charging fails after three rounds of the pre-charging control.

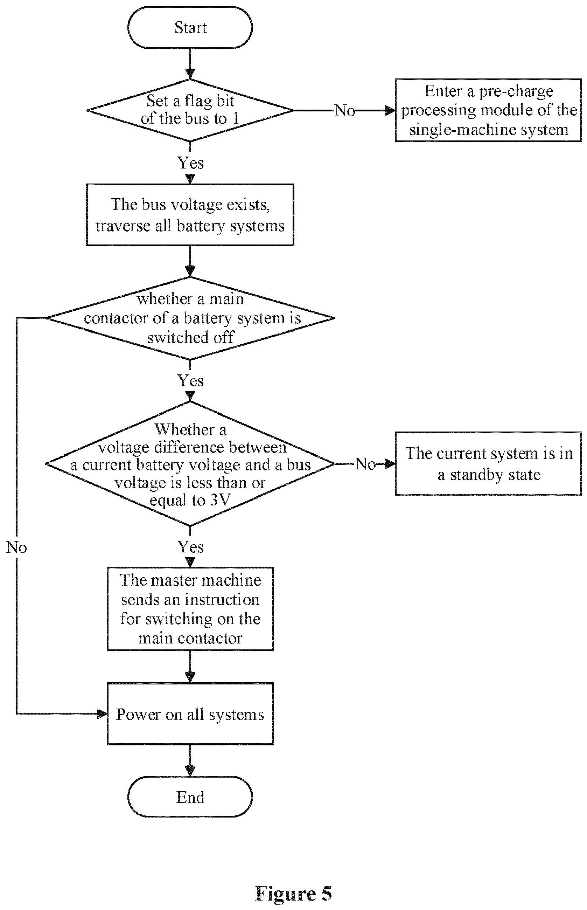

Figure 5 is a flow chart of powering on a second single-machine system according to an embodiment of the present disclosure. As shown in Figure 5, the process includes the following steps S1 to S3.

In step S1, it is determined whether a bus flag is set to 1. It is determined that the multi-battery charging system is powered on in a case that the bus flag is set to 1.

In step S2, it is determined, for each of the single-machine systems (each second single-machine system), whether a main contactor of the single-machine system is switched on.

In step S3, a master machine sends, according to an automatic switching logic, a command for forcing all main contactors to be switched on, in a case that a difference between a voltage of a current single-machine system and a bus voltage is within 3V, so as to realize power-on of all the single-machine systems.

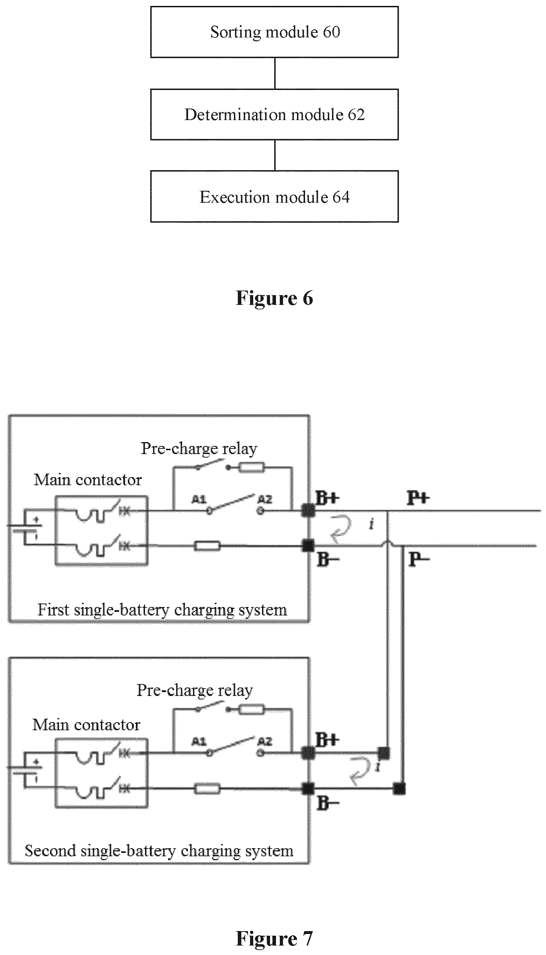

Figure 6 is a structural diagram of an apparatus for controlling a multi-battery charging system according to an embodiment of the present disclosure. As shown in Figure 6, the apparatus includes a sorting module 60, a determination module 62, and an execution module 64.

The sorting module 60 is configured to sort battery voltages of multiple single-machine systems in the multi-battery charging system, and determine a first single-machine system from multiple single-machine systems based on a sorting result, where the multiple single-machine systems are multiple battery systems in the multi-battery charging system.

The determination module 62 is configured to switch on a pre-charge relay in the first single-machine system, and determine a pre-charge state of the first single-machine system based on a voltage of the first single-machine system.

The execution module 64 is configured to: in a case that the pre-charge state indicates completion of pre-charging, switch on a main contactor of the first single-machine system, switch off the pre-charge relay, and power on single-machine systems other than the first single-machine system among the multiple single-machine systems.

It should be noted that modules shown in Figure 6 may be program modules (for example, a set of program instructions for implementing a specific function), or hardware modules. The hardware modules may be embodied in as respective processors or a single processor, which is not limited hereto.

It should be noted that, for details of the embodiment shown in Figure 6, one may refer to relevant description of the embodiment shown in Figure 1, which is not repeated here.

Figure 7 is a structural diagram of a multi-battery charging apparatus according to an embodiment of the present disclosure. As shown in Figure 7, the multi-battery charging apparatus includes: a first single-battery charging system and a second single-battery charging system. The first single-battery charging system is determined from a sorting result obtained by sorting battery voltages of single-battery charging systems in the multi-battery charging apparatus. The second single-battery charging system is a single-battery charging system that is in the multi-battery charging apparatus but is other than the first single-battery charging system.

The first single-battery charging system includes a first pre-charge relay and a first main contactor. The first pre-charge relay is configured to be switched on after the battery voltages of the single-battery charging systems are sorted. The first single-battery charging system is further configured to be switched off in a case that a pre-charging state of the first single-battery charging system indicates completion of pre-charging. The first main contactor is configured to be switched on in a case that the pre-charge state of the first single-battery charging system indicates completion of pre-charging

The second single-battery charging system is configured to be powered on after the first main contactor is switched on and the first pre-charge relay is switched off.

In an embodiment of the present disclosure, the second single-battery charging system is powered on through the following steps: setting a flag bit of a bus in the multi-battery charging system to a target value, in a case that the pre-charge state of the first single-battery charging system indicates completion of pre-charging; determining whether main contactors of the multiple single-machine systems are switched on, in a case that the flag bit of the bus is the target value; determining, in a case that a main contactor of a second single-machine system is not switched on, whether a difference between the voltage of the second single-machine system and a voltage of the bus is less than or equal to a preset voltage; and switching on the main contactor of the second single-machine system, in a case that the difference between the voltage of the second single-machine system and the voltage of the bus is less than or equal to the preset voltage value.

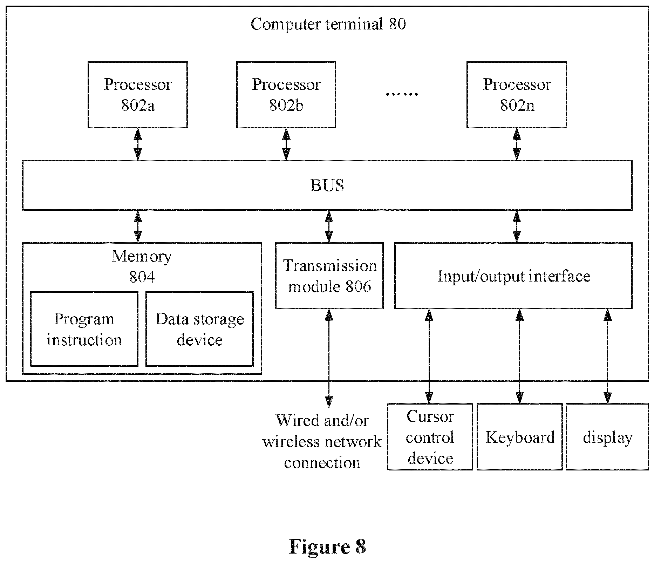

Figure 8 shows a block diagram of a hardware structure of a computer terminal (or mobile device) for implementing a method for controlling a multi-battery charging system according to an embodiment of the present disclosure. As shown in Figure 8, a computer terminal 80 (or mobile device 80) may include one or more processors 802 (shown as 802a, 802b, ..., 802n in the figure), a memory 804 for storing data, and a transmission module 806 for communication. The processor 802 may include, but is not limited to a microprocessor MCU or a programmable logic device FPGA. In addition, the computer terminal 80 may further include: a display, an input/output interface (I/O interface), a universal serial bus (USB) port (which may be included as one of BUS ports), a network interface, a power supply and/or a camera. Those of ordinary skills in the art may understand that the structure shown in Figure 8 is only illustrative and does not constitute a limitation to a structure of the electronic device. For example, the computer terminal 80 may include more or fewer components than those shown in Figure 8, or have a different configuration than those shown in Figure 8.

It should be noted that the one or more processors 802 and/or other data processing circuit described above may be generally referred to herein as a "data processing circuit". The data processing circuit may be embodied in whole or in part as software, hardware, firmware or any other combination. Furthermore, the data processing circuit may be a single independent processing module, or may be fully or partially integrated into any of the other components in the computer terminal 80 (or mobile device).

The memory 804 may store software programs of application software and modules, such as program instructions/data storage device corresponding to the method for controlling a multi-battery charging system in the embodiments of the present disclosure. The processor 802 executes the software programs and modules stored in the memory 804 to perform various functional applications and data processing, that is, to implement the method for controlling a multi-battery charging system. The memory 804 may include a high-speed random-access memory, and may further include a non-volatile solid memory, such as at least one magnetic disk storage device or a flash memory. In some examples, the memory 804 may further include a memory located remotely relative to the processor 802. The remote memory may be connected to the computer terminal 80 through a network. Examples of the network include, but are not limited to, the Internet, an intranet, a local area network, a mobile communication network, and a combination thereof.

The transmission module 806 is configured to receive or send data via a network. Specific examples of the network may include a wireless network provided by a communication provider of the computer terminal 80. In an example, the transmission module 806 includes a network interface controller (NIC). The NIC may be connected to other network devices through a base station, so as to communicate with the Internet. In an example, the transmission module 806 may be a radio frequency (RF) module. The RF module is configured to communicate with the Internet in a wireless manner.

The display may be, for example, a touch liquid crystal display (LCD), which enables a user to interact with a user interface of the computer terminal 80 (or mobile device).

It should be noted here that in some embodiments, the computer device (or electronic device) as shown in Figure 8 may include a hardware component (including a circuit), a software component (including computer codes stored on a computer-readable medium), or a combination of a hardware component and a software component. It should be noted that Figure 8 is only an example of a specific embodiment, and is intended to illustrate types of components that may be included in the computer device (or electronic device) described above.

It should be noted that the electronic device shown in Figure 8 is configured to perform the method for controlling a multi-battery charging system as shown in Figure 1. Therefore, relevant explanations of execution of the above commands are applicable to the electronic device and are not repeated here.

A non-volatile storage medium storing a program is further provided according to an embodiment of the present disclosure. The program, when executed, controls a device where the storage medium is located to perform the method for controlling a multi-battery charging system.

The non-volatile storage media stores the program for the following functions: sorting battery voltages of multiple single-machine systems in the multi-battery charging system, and determining a first single-machine system from the multiple single-machine systems based on a sorting result, where the multiple single-machine systems are multiple battery systems in the multi-battery charging system; switching on a pre-charge relay in the first single-machine system, and determining a pre-charge state of the first single-machine system based on a voltage of the first single-machine system; and in a case that the pre-charge state indicates completion of pre-charging, switching on a main contactor of the first single-machine system, switching off the pre-charge relay, and powering on single-machine systems other than the first single-machine system among the multiple single-machine systems.

An electronic device is further provided according to an embodiment of the present disclosure. The electronic device includes a memory and a processor. The processor is configured to execute a program stored in the memory. The program, when executed, performs the method controlling a multi-battery charging system.

The processor is configured to execute the program for the following functions: sorting battery voltages of multiple single-machine systems in the multi-battery charging system, and determining a first single-machine system from the multiple single-machine systems based on a sorting result, where the multiple single-machine systems are multiple battery systems in the multi-battery charging system; switching on a pre-charge relay in the first single-machine system, and determining a pre-charge state of the first single-machine system based on a voltage of the first single-machine system; and in a case that the pre-charge state indicates completion of pre-charging, switching on a main contactor of the first single-machine system, switching off the pre-charge relay, and powering on single-machine systems other than the first single-machine system among the multiple single-machine systems.

The serial numbers of the embodiments of the present disclosure are only for description, and do not indicate any preference among the embodiments.

In the embodiments of the present disclosure, the descriptions of the embodiments have respective focuses. For a part that is not described in detail in an embodiment, reference may be made to related descriptions of other embodiments.

From the embodiments of the present disclosure, it should be understood that the disclosed technical contents may be implemented in other manners. The apparatus embodiments described above are only illustrative. For example, division of the units may be based on logical functions, and there may be other division manners in actual implementation. For example, multiple units or components may be combined with each other or integrated into another system, or some features may be omitted or not implemented. In addition, the shown or discussed mutual coupling or direct coupling or communication connection may be indirect coupling or communication connection through some interfaces, units or modules, and may be electrical, or in other forms.

The units described as separate components may or may not be physically separated. Components shown as units may or may not be physical units. That is, the components may be located at a same position or distributed over multiple units. Some or all of the units may be adopted based on an actual need to achieve the objective of the solutions in the embodiments of the present disclosure.

In addition, the functional units in the various embodiments of the present disclosure may be integrated into a single processing unit, or the units may be physically separated, or two or more units may be integrated into one unit. The above-mentioned integrated unit may be implemented in a form of hardware or a software functional unit.

In a case that the integrated unit is implemented in the form of a software functional unit and sold or used as an independent product, the integrated unit may be stored in a computer-readable storage medium. Based on such understanding, the technical solutions of the embodiments of the present disclosure, essentially or in part, contribute to the conventional technology, or all or part of the technical solutions may be embodied in a form of a computer software product. The computer software product is stored in a storage medium and includes instructions for causing a computer device (such as a personal computer, a server, a data center or other network devices) to perform all or part of the method described in the embodiments of the present disclosure. The storage media includes a USB disk, a read-only memory (ROM), a random-access memory (RAM), a mobile hard disk, a magnetic disk or optical disk, and other media that can store program codes.

Hereinabove described are only preferred embodiments of the present disclosure. It should be noted that improvements and modifications can be made by those of ordinary skills in the art, without departing from the principles of the present disclosure. Such improvements and modifications fall within the protection scope of the present disclosure.

## Claims

1. A method for controlling a multi-battery charging system, comprising:
sorting battery voltages of multiple single-machine systems in the multi-battery charging system, and determining a first single-machine system from the multiple single-machine systems based on a sorting result, wherein the multiple single-machine systems are multiple battery systems in the multi-battery charging system;
switching on a pre-charge relay in the first single-machine system, and determining a pre-charge state of the first single-machine system based on a voltage of the first single-machine system; and
in a case that the pre-charge state indicates completion of pre-charging, switching on a main contactor of the first single-machine system, switching off the pre-charge relay, and powering on single-machine systems other than the first single-machine system among the multiple single-machine systems.

2. The method according to claim 1, wherein the switching on a pre-charge relay in the first single-machine system, and determining a pre-charge state of the first single-machine system based on a voltage of the first single-machine system comprises:
remaining the pre-charge relay in a switched-on state for a first preset time period, in response to a first switching-on command;
obtaining an input-side voltage of the first single-machine system and an output-side voltage of the first single-machine system; and
determining that pre-charging of the first single-machine system is completed in a case that the output-side voltage is greater than a preset percentage of the input-side voltage; and determining that pre-charging of the first single-machine system is uncompleted in a case that the output-side voltage is less than or equal to the preset percentage of the input-side voltage.

3. The method according to claim 2, wherein on determining that pre-charging of the first single-machine system is uncompleted, the method further comprises:
step S1, remaining the pre-charge relay in the switched-on state for the first preset time period, in response to a second switching-on command;
step S2, obtaining an input-side voltage of the first single-machine system and an output-side voltage of the first single-machine system;
step S3, determining whether the output-side voltage is greater than the preset percentage of the input-side voltage; determining that pre-charging of the first single-machine system is completed in a case that the output-side voltage is greater than the preset percentage of the input-side voltage; and determining pre-charging of the first single-machine system is uncompleted in a case that the output-side voltage is less than or equal to the preset percentage of the input-side voltage;
performing, in a case that the output-side voltage is less than or equal to the preset percentage of the input-side voltage, a first round of repeating the step S1 to the step S3 for a first preset number of times; and
determining that pre-charging of the first single-machine system is failed, in a case that the output-side voltage is still less than or equal to the preset percentage of the input-side voltage after the first round of repeating the step S1 to the step S3 for the first preset number of times.

4. The method according to claim 3, wherein after determining that pre-charging of the first single-machine system is failed, the method further comprises:
generating a first alarm message for failure of pre-charging;
after a second preset time period, clearing the first alarm message and performing a second round of repeating the step S 1 to the step S3 for the first preset number of times; and
determining existence of a fault in pre-charging of the first single-machine system, in a case that the output-side voltage is still less than or equal to the preset percentage of the input-side voltage after the second round of repeating the step S 1 to the step S3 for the first preset number of times, and generating a second alarm message for the fault in pre-charging.

5. The method according to claim 1, wherein the sorting battery voltages of multiple single-machine systems in the multi-battery charging system, and determining a first single-machine system from the multiple single-machine systems based on a sorting result comprises:
obtaining respective identification numbers of the multiple single-machine systems and respective battery voltages of the multiple single-machine systems, wherein the identification numbers are in a one-to-one correspondence to the battery voltages;
forming an initial sequence constituted by the battery voltages;
sequentially comparing adjacent battery voltages in the initial sequence;
swapping positions of a first battery voltage and a second battery voltage in the sequence if the first battery voltage is greater than the second battery voltage, wherein the first battery voltage is one of the adjacent battery voltages in the initial sequence which is closer to a starting position of the initial sequence, and the second battery voltage is one of the adjacent battery voltages in the initial sequence which is closer to an end position of the initial sequence;
repeating the swapping to obtain a sorted array in which the battery voltages are sorted in an ascending order;
determining a sorting result of the single-machine systems based on the identification numbers corresponding to the battery voltages in the sorted array; and
determining a single-machine system ranked first in the sorting result as the first single-machine system.

6. The method according to claim 1, wherein the powering on single-machine systems other than the first single-machine system comprises:
setting a flag bit of a bus in the multi-battery charging system to a target value, in a case that the pre-charge state indicates completion of pre-charging;
determining whether main contactors of the multiple single-machine systems are switched on, in a case that the flag bit of the bus is the target value;
determining, in a case that a main contactor of a second single-machine system among the multiple single-machine systems is not switched on, whether a difference between the voltage of the second single-machine system and a voltage of the bus is less than or equal to a preset voltage; and
switching on the main contactor of the second single-machine system, in a case that the difference between the voltage of the second single-machine system and the voltage of the bus is less than or equal to the preset voltage value.

7. The method according to claim 6, further comprising:
determining that the second single-machine system is in a standby state, in a case that the difference between the voltage of the second single-machine system and the voltage of the bus is greater than the preset voltage value.

8. An apparatus for controlling a multi-battery charging system, comprising:
a sorting module, configured to sort battery voltages of multiple single-machine systems in the multi-battery charging system, and determine a first single-machine system from the multiple single-machine systems based on a sorting result, wherein the multiple single-machine systems are multiple battery systems in the multi-battery charging system;
a determination module, configured to switch on a pre-charge relay in the first single-machine system, and determine a pre-charge state of the first single-machine system based on a voltage of the first single-machine system; and
an execution module, configured to: in a case that the pre-charge state indicates completion of pre-charging, switch on a main contactor of the first single-machine system, switch off the pre-charge relay, and power on single-machine systems other than the first single-machine system among the multiple single-machine systems.

9. A multi-battery charging apparatus, comprising a first single-battery charging system and a second single-battery charging system, wherein
the first single-battery charging system is determined from a sorting result obtained by sorting battery voltages of single-battery charging systems in the multi-battery charging apparatus;
the second single-battery charging system is a single-battery charging system that is in the multi-battery charging apparatus but is other than the first single-battery charging system,
the first single-battery charging system comprises a first pre-charge relay and a first main contactor, wherein
the first pre-charge relay is configured to be switched on after the battery voltages of the single-battery charging systems are sorted, and is further configured to be switched off in a case that a pre-charging state of the first single-battery charging system indicates completion of pre-charging; and the first main contactor is configured to be switched on in a case that the pre-charge state of the first single-battery charging system indicates completion of pre-charging; and
the second single-battery charging system is configured to be powered on after the first main contactor is switched on and the first pre-charge relay is switched off.

10. A non-volatile storage medium storing a program, wherein
the program, when executed, controls a device where the non-volatile storage medium is located to perform the method according to any one of claims 1 to 7.

11. An electronic device, comprising a memory and a processor, wherein
the processor is configured to execute a program stored in the memory, and the program, when executed, performs the method according to any one of claims 1 to 7.
